(19) Europäisches Patentamt

European Patent Office

Office européen des brevets

(11) Numéro de publication: **0 187 770**

**B1**

(12) **FASCICULE DE BREVET EUROPÉEN**

(45) Date de publication du fascicule du brevet:
**13.01.88**

(51) Int. Cl.⁴: **B 23 H 1/02**

(21) Numéro de dépôt: **85902950.6**

(22) Date de dépôt: **27.06.85**

(86) Numéro de dépôt international:
**PCT/CH 85/00103**

(87) Numéro de publication internationale:
**WO 86/00249 (16.01.86 Gazette 86/02)**

(54) **CIRCUIT ELECTRIQUE POUR MACHINE D'USINAGE PAR ELECTRO-EROSION.**

(30) Priorité: **29.06.84  PCT/CH84/00108**

(43) Date de publication de la demande:
**23.07.86 Bulletin 86/30**

(45) Mention de la délivrance du brevet:
**13.01.88 Bulletin 88/2**

(84) Etats contractants désignés:
**CH DE FR GB IT LI**

(56) Documents cité:
**Aucun document n'a été retenu à leur encontre.**

(73) Titulaire: **MIRONOFF, Nicolas, CH- 1295 Mies (CH)**

(72) Inventeur: **MIRONOFF, Nicolas, CH- 1295 Mies (CH)**

(74) Mandataire: **Dubois, Jean René, BOVARD SA
Ingénieurs- Conseils ACP Optingenstrasse 16,
CH- 3000 Berne 25 (CH)**

## Description

La présente invention concerne un circuit électrique pour machine d'usinage par électro-érosion travaillant une pièce par décharges électro-érosives en milieu diélectrique, dans un espace d'usinage entre une électrode-outil et la dite pièce qui constitue aussi elle-même une électrode, comprenant des moyens de délivrance de décharges érosives, ayant des bornes de sortie qui fournissent respectivement sur les dites électrodes des impulsions d'énergie electrique érosives, et des moyens de préallumage pour fournir, chaque fois en prologue à une dite impulsion érosive, des impulsions de préallumage qui ont une tension plus élevée et une énergie plus faible que les dites impulsions érosives, et qui allument, c'est-à-dire ionisent, dans l'espace d'usinage au sein du fluide diélectrique, chaque fois un canal qui est ensuite parcouru par la décharge érosive.

Un circuit conforme à la définition générique énoncée ci-dessus est déjà connu, notamment par l'exposé de brevet US-A-3 893 013, au nom du même inventeur et déposant.

Par ailleurs, l'exposé de brevet US-A-3 604 885, cité comme "arrière-plan technologique", propose un circuit qui se rapproche également de la définition générique ci-dessus.

Toutefois, dans l'art anterieur, on n'a jamais proposé de moyens pour asservir la tension de préallumage à une valeur considérée comme favorable, l'inconstance de la tension de crête de préallumage étant source de perturbation et d'amoindrissement du rendement et de la qualité de l'usinage. Les risques de fluctuation indésirable de la tension de crête de preallumage sont particulièrement grands lorsque l'énergie de préallumage est prélevée de l'élément (en l'occurrence condensateur d'usinage) qui stocke temporairement et répétitivement l'énergie électrique de décharges érosives. Le document PCT/CH 84/OOiO8 (priorité ci-revendiquée, publication 1985) expose, dans ses quatorze premières pages, des considérations techniques générales et détaillées concernant l'usinage par électro-érosion. Ces quatorze pages sont considérées comme incluses dans la présente spécification, par voie de référence.

D'une façon générale, la présente invention vise à améliorer les systèmes d'usinage par électro-érosion à préallumage antérieurement connus, le but de la présente invention étant en particulier de fournir un circuit électrique pour une machine d'usinage par électro-érosion travaillant selon le principe de préallumage, dans laquelle les inconvénients de l'art antérieur soient évités, et notamment dans laquelle les paramètres qui conditionnent la qualité de l'allumage des canaux et de l'usinage électro-érosif soient adéquatement maîtrisés.

Conformément à l'invention, le circuit électrique pour machine d'usinage par électro-érosion, conforme à la définition générique précédemment énoncée, atteint les performances visées du fait de la présence des caractères énoncés dans l'une ou dans l'autre des revendications indépendantes. On remarque que les caractères, soit de l'une, soit de l'autre, des revendications indépendantes interviennent respectivement pour différents aspects du problème de la stabilisation du préallumage.

Les revendications dépendantes définissent des formes d'exécution de l'objet de l'invention qui sont particulièrement avantageuses, notamment des points de vue de la stabilité de tension, de la détection des tendances au surcroît d'énergie de préallumage, de la constitution de circuits permettant une stabilisation de l'énergie, manuellement ou automatiquement, de la simplicité ou de la commodité d'utilisation des circuits engendrant les impulsions de préallumage, etc....

Concernant les particularités de l'invention, il faut relever que les moyens d'écrétage qui sont mentionnés peuvent être soit à caractéristique limitatrice de tension, mais non stabilisatrice de tension (p.e. diode Zener en série avec résistance non négligeable) soit a caractéristique veritablement stabilisatrice de courant (P.e. diode Zener sans résistance ohmique notable en série).

Comme le GAP d'usinage est présumé présenter une caractéristique électro-disruptive, le branchement en parallèle avec lui d'un circuit d'ecretage egalement présumé électro-disruptif peut paraître paradoxal. En fait, tout bien considéré, ce paradoxe n'intervient pas, étant donné que d'une part le GAP d'usinage n'est pas l'équivalent d'un élément électro-disruptif classique, et que, d'autre part, on a des moyens qui asservissent la distance de GAP au paramètre des impulsions de préallumage, c'est-à-dire qui maintiennent substantiellement égales les deux valeurs de tension "apparemment électro-disruptives" (mais dont en réalité au moins une admet une certaine variation permettant de les accorder l'une à l'autre).

Concernant les moyens précités d'asservissement de distance de GAP, c'est-à-dire, les moyens, généralement motorisés, de repositionnement de l'électrode-outil par rapport à la pièce à usiner, il faut noter que, dans certaines formes d'exécution particulières, on pourrait se passer de tels moyens. Ce serait notamment le cas d'une machine d'usinage par électro-érosion dans laquelle l'électrode serait destinée uniquement à imprimer un bas-relief peu profond dans la pièce à usiner. Cette dernière pourrait être mise en place, le circuit électrique étant arrêté, avec l'électrode-outil pré-positionnée juste à la distance voulue, ensuite de quoi les moyens électriques seraient mis en fonctionnement pour imprimer le bas-relief en question, sans déplacement de l'électrode-outil, sur quoi l'usinage se trouverait terminé, la pièce usinée étant enlevée pour faire place à la prochaine pièce à usiner. Pour cette raison, il n'apparaît pas adéquat d'inclure la mention des moyens de positionnement d'électrode en question dans la définition la plus générale de l'objet de l'invention.

Le dessin annexé illustre, à titre d'exemple et en commençant par présenter une forme d'exécution connue de l'art antérieur, des formes d'exécution de l'objet de l'invention; dans ce dessin:

la fig. 1 représente un circuit pour machine d'usinage par électro-érosion, utilisant le système du préallumage, connu de l'art antérieur, notamment par US-A-3 893 013,

la fig. 2 représente le schéma d'un circuit électrique pour machine d'usinage par électro-érosion conforme à l'invention, cette fig. 2 représentant d'une façon plus détaillée la partie servant à la génération et à l'application des impulsions de préallumage,

la fig. 3 est un schéma d'une forme d'exécution d'un circuit conforme à l'invention, analogue à la fig. 2, mais comportant de plus des moyens signalisateurs fournissant une indication perceptible d'un état de surcroît d'énergie de préallumage, de même que des moyens à commande manuelle permettant de réduire cette énergie, notamment sur la base de la dite indication,

la fig. 4 est un schéma d'une forme d'exécution d'un circuit conforme à l'invention, analogue à celui de la fig. 3, mais présentant de plus des moyens, de limitation automatiques d'énergie de préallumage,

la fig. 5 est un schéma partiel d'une variante que l'on peut, avantageusement dans certains cas, utiliser pour remplacer la partie de circuit alimentant l'enroulement primaire d'un transformateur de generation des impulsions de préallumage,

la fig. 6 est un schéma de principe, accompagné d'un diagramme représentant l'évolution y relative de la tension et du courant, qui illustre le principe de fonctionnement de l'ensemble du circuit dans le cas où les moyens de délivrance de décharges érosives fonctionnent selon le principe de relaxation, avec un condensateur d'usinage se chargeant et se déchargeant périodiquement,

la fig. 7 est un schéma de principe similaire à celui de la fig. 6, mais illustrant le cas ou les moyens en question sont à commutation électronique et délivrent une forme d'onde à creneaux rectangulaires, et,

la fig. 8 illustre, par une série de diagrammes en fonction du temps, un aspect particulier observé dans certaines formes d'exécution de l'objet de l'invention.

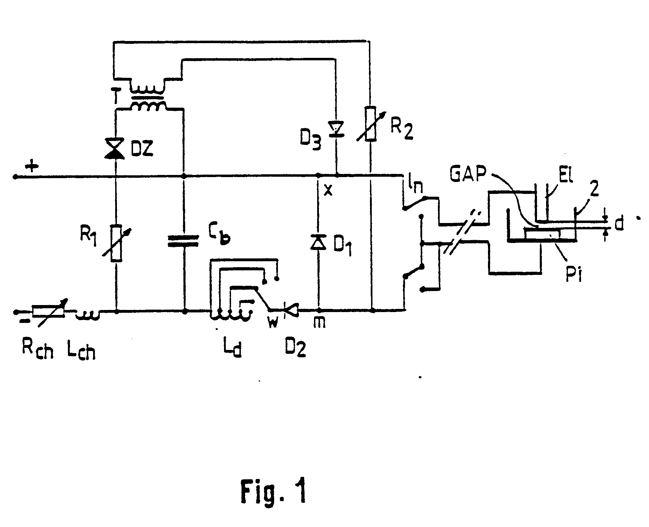

Dans le circuit pour machine d'électro-érosion représenté à la fig. 1, antérieurement connu par l'exposé de brevet US-A-3 893 013, on a un condensateur d'usinage $C_b$ , alimenté par une source de courant continu par l'intermédiaire d'impédances $R_{ch}$ et $L_{ch}$, qui se charge jusqu'à une certaine tension pour se décharger périodiquement sous forme d'impulsions électroérosives, dans un GAP d'usinage d. Une inductance ajustable $L_d$ permet de régler la durée des impulsions et adoucit les sauts de courant, notamment à l'instant où la décharge électro-érosive commence. Des diodes $D_1$ et $D_2$ rendent les impulsions érosives unipolaires, empêchant l'apparition d'oscillations lors de la décharge.

Un inverseur $I_n$ permet d'inverser la polarité entre l'électrode et la pièce à usiner.

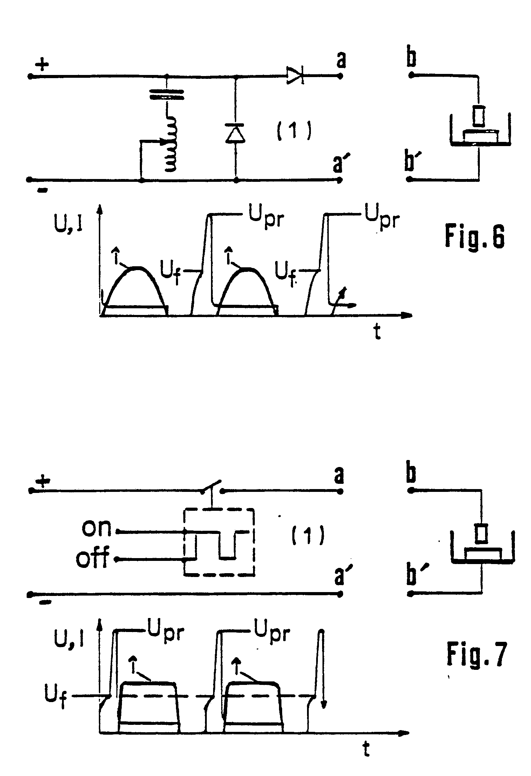

Le principe de génération des impulsions électro-érosives dans le circuit de la fig. 1 est analogue à celui qui est illustré à la fig. 6. Toutefois, le circuit de la fig. 1 comprend, selon l'art antérieur, des moyens de préallumage encore peu perfectionnés, alors que la fig. 6 illustre le principe même de la génération des impulsions électro-érosives en tant que l'un de ceux auxquels peut s'appliquer l'invention (bien que les éléments qui caractérisent l'objet de l'invention, à savoir ceux qui concernent le préallumage, ne se trouvent pas dessinés à cette fig. 6).

Revenant à la fig. 1, on voit que le circuit selon cette figure comprend des moyens de préallumage incluant un transformateur-élévateur de tension T, une diode Zener DZ, une résistance variable $R_1$ , une résistance variable $R_2$ et une diode $D_3$. On comprend bien que, lorsque la tension de charge du condensateur $C_u$ atteint une valeur déterminée par la tension de la diode Zener DZ, quelque peu inférieure à la tension d'alimentation, un courant commence à circuler dans l'enroulement primaire du transformateur T, à travers la résistance $R_1$. L'augmentation de ce courant induit une impulsion, de tension plus élevée, dans l'enroulement secondaire du transformateur, lequel est connecté en parallèle, sur le GAP d, à travers la diode $D_3$ et la résistance (ajustable) $R_2$. L'énergie que cette impulsion de préallumage peut délivrer dépend des paramètres des composants du circuit de préallumage, la tension de préallumage chutant naturellement lorsqu'intervient le courant de préallumage, mais d'une façon difficile à déterminer. Dans ce dispositif, ni la tension de préallumage, ni l'énergie de préallumage ne peuvent être adéquatement maitrisées.

L'expérience a montré que le circuit selon l'art antérieur représenté à la fig. 1 ne pouvait être utilisé que d'une manière très restrictive dans les conditions industrielles réelles. Les difficultés provenaient notamment des raisons suivantes:

- du fait du mode de connexion des enroulements du transformateur T, celui-ci devait présenter un rapport de transformation ayant une haute valeur d'élévation de tension, ce qui provoquait une importante consommation du courant provenant du condensateur $C_u$. De plus, cette situation avait pour effet que le transformateur T présentait des caractéristiques inductives peu favorables au préallumage et en particulier à la maîtrise de ses paramètres.

- Après la phase d'augmentation du courant, un important courant continu traversait l'enroulement primaire du transformateur, la diode Zener, et la résistance en série avec elle, une grande partie de l'énergie étant ainsi perdue (et provoquant selon le cas des échauffements excessifs). Cette situation nuisait de plus à la puissance de l'usinage.

- Dans les cas où la charge du condensateur d'usinage se caractérisait par des courbes très raides, de même que dans le cas où l'on aurait voulu utiliser des impulsions érosives du type rectangulaire engendrées électroniquement, la transformation d'une partie de l'énergie en impulsions de préallumage n'était pratiquement plus possible par suite d'un rendement insuffisant.

- Les impulsions de préallumage étant entièrement dépendantes, quant à leur tension et à leur courant, c'est-à-dire leur énergie, de la puissance d'usinage et des caractéristiques des impulsions érosives, les paramètres des impulsions de préallumage ne pouvaient guère être maîtrisés, échappant même à tout contrôle. Des variations notables des impulsions érosives produisaient des effets parasites fort nuisibles. On rencontrait souvent une augmentation spontanée de l'énergie, et le cas échéant de la tension, de préallumage, ce qui provoquait une ionisation excessive du milieu diélectrique, favorisant les courts-circuits et les arcs continus.

- En outre, des phénomènes parasites (tels que ceux précités ou d'autres encore) fournissaient au système de servo-commande de l'avance automatique (ou positionnement automatique) de l'électrode-outil des informations souvent incohérentes de sorte que le servo-moteur était incapable de maintenir correctement la valeur du GAP d'usinage, rendant instable tout le processus d'usinage.

- En bref, l'utilisation de ce circuit n'était praticable que dans des conditions particulières, très limitées, de tension, de courant et de capacité d'usinage à faible puissance. De plus, des moyens de préallumage ne permettaient pas l'application du principe à des systèmes différents de génération des impulsions érosives.

Ainsi, on constate que le principe de préallumage ne peut être correctement appliqué, de façon à fournir tous les bénéfices qui peuvent en ressortir, que si certaines conditions sont remplies. Une performance visée par l'invention consiste justement en la satisfaction de ces conditions, qui sont les suivantes:

1. Les paramètres électriques des impulsions de préallumage doivent, dans une large mesure, être fixées seulement en fonction de leur effet ionisateur (polarisation + ionisation), en restant le plus possible indépendants du régime et de la puissance d'usinage, de la forme d'onde de courant des impulsions érosives, et d'autres caractéristiques encore du générateur d'impulsions.

2. La tension des impulsions de préallumage doit être limitée, si possible strictement, à une valeur déterminée et constante, car c'est cette tension qui, par le jeu des moyens de positionnement d'électrode, détermine la valeur du GAP, de même qu'elle détermine la valeur de "l'interstice de découpe" (c'est-à-dire la différence entre les dimensions de l'électrode-outil et celles du creux usiné dans la pièce).

3. L'énergie des impulsions de préallumage doit être seulement une fraction minime de l'énergie des impulsions érosives et ne doit servir qu'à la ionisation du canal; il devrait y avoir le moins possible d'influence mutuelle entre les paramètres des impulsions de préallumage et ceux des impulsions érosives.

4. Pour assurer une ionisation régulière du canal dans les différentes conditions de régime et de puissance d'usinage, il est bon que l'énergie des impulsions de préallumage soit adaptée à ces conditions, avec au moins une possibilité de réglage manuel, et si possible une possibilité de réglage automatique.

5. L'instant d'application des impulsions de préallumage doit être adéquatement déterminé en fonction du potentiel électrique disponible pour les impulsions érosives.

6. La durée de l'impulsion de préallumage, c'est-à-dire de l'effet ionisateur, doit être aussi courte que possible; l'impulsion de préallumage doit tomber dès que le canal est ionisé et que le courant d'impulsion érosive commence à passer.

L'expérience montre que les meilleurs résultats technologiques, c'est-à-dire le plus grand enlèvement du matériau usiné et la plus faible usure de l'électrode-outil sont obtenus lorsque les conditions susmentionnées sont satisfaites. Il est clair que certaines conditions peuvent être plus impératives que d'autres, le premier rang revenant à la régularité de la tension de préallumage, suivie de très près par les conditions relatives à l'énergie de préallumage.

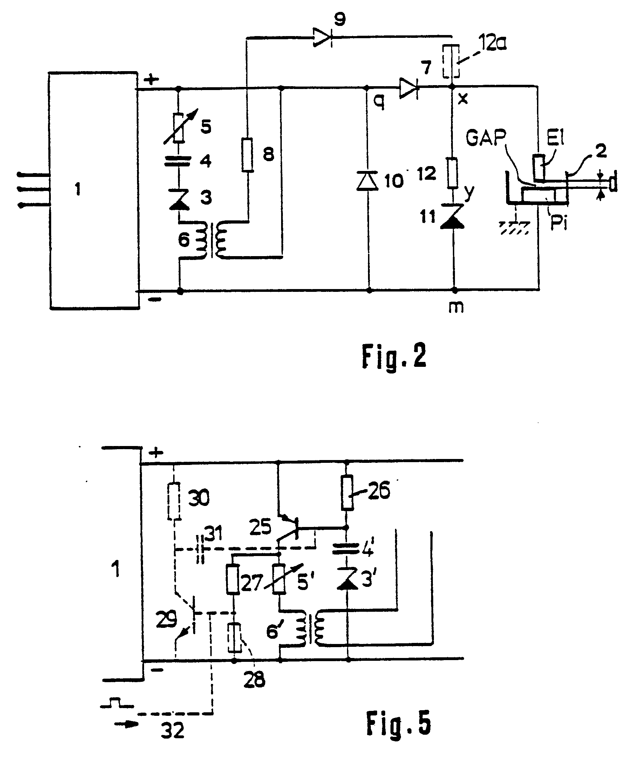

L'objet de l'invention, dont on va maintenant décrire des exemples en liaison avec les fig. 2 et suivantes, réalise une maîtrise fort complète des paramètres des impulsions de préallumage, en rendant adéquat leur effet ionisateur, quelles que soient les conditions de régime et de puissance d'usinage, et sans dépendance excessive non plus des autres conditions technologiques. Un autre but de l'invention est d'assurer cette maîtrise d'une façon automatique.

Dans le circuit conforme à l'invention qui est schématiquement représenté à la fig. 2, les moyens de délivrance de décharges érosives 1 peuvent être semblables à l'ensemble du condensateur $C_u$ et des composants périphériques représentés à la fig. 1. Toutefois, le circuit d'alimentation en décharges érosives 1 de la fig. 2, peut également être constitué d'une autre manière, par exemple à l'aide de moyens de commutations électroniques. Les parties supérieures des fig. 6 et 7 illustrent du reste deux façons différentes selon lesquelles le circuit d'alimentation 1 en décharges érosives peut être constitue et peut fonctionner.

A la fig. 2, le dispositif matériel 2 d'usinage par électro-érosion comprend une cuve remplie de liquide diélectrique et dans laquelle une électrode-outil EI est située jusqu'au -dessus d'une pièce à usiner Pi. Le circuit 1 de délivrance des impulsions électro-érosives est connecté aux bornes des deux électrodes que constituent l'électrode-outil d'une part et la pièce à usiner d'autre part, uniquement par l'intermédiaire d'une diode 7 nécessaire pour que puissent être appliquées les impulsions de préallumage. Une diode 10 empêche toute inversion de polarité de tension aux bornes du GAP, c'est-à-dire sur les électrodes El et Pi.

Pour le reste, le schéma de la fig. 2 illustre en détail seulement le circuit de préallumage. On voit qu'il comprend un transformateur 6, élévateur de tension, dans lequel sont engendrées les impulsions de préallumage. Une résistance ajustable 5, un condensateur 4 et une diode Zener 3 sont connectés en série avec l'enroulement primaire du transformateur 6, toute cette branche-série étant connectée sur les bornes de sortie du circuit d'alimentation 1. Par ailleurs, l'enroulement secondaire du transformateur 6 est connecté, par l'intermédiaire d'une résistance de limitation 8 et d'une diode de non-retour 9, aux bornes de la diode 7, précédemment mentionnée.

On comprend bien que, avant le début de l'impulsion érosive, la tension délivrée par le circuit 1, qui avait été rendue nulle à la fin de l'impulsion érosive précédente, commence à augmenter et en vient à dépasser la tension caractéristique de la diode Zener 3. Le condensateur 4 commence alors à se charger à travers la résistance 5, la diode Zener 3 et l'enroulement primaire du transformateur-élévateur 6. Ce courant, d'abord limité par la self-inductance du transformateur, augmente rapidement ensuite, tant que la tension d'alimentation est en situation d'augmentation. La tension induite par l'augmentation du courant dans l'enroulement primaire du transformateur se présente également dans l'enroulement secondaire de celui-ci, sous forme d'une impulsion d'une tension notablement plus élevée, capable seulement de se traduire en un courant relativement faible, laquelle tension est appliquée aux bornes de la diode 7, polarisée alors dans le sens bloquant. Ainsi, la tension aux bornes du GAP d est égale à la somme de la tension d'alimentation en impulsions érosives (bornes de sortie du circuit 1), et de l'impulsion de préallumage (enroulement secondaire du transformateur 6).

On note que le condensateur 4 sert à éviter que le courant dans l'enroulement primaire du transformateur soit déterminé exclusivement par la caractéristique de la diode Zener, la résistance ohmique et la self-inductance du transformateur. L'expérience a montré que, sans condensateur, l'impulsion de préallumage se perd, probablement parce qu'elle est à flanc trop raide ou grevée d'une impédance-série trop élevée. Au contraire, avec le condensateur 4 en série, on obtient, comme les essais l'ont montré, une impulsion de préallumage adéquate et efficace. Il est probable que des processus de charges et de décharges à polarité inverse interviennent dans le condensateur 4. Sans entrer dans une étude poussée à ce sujet, on remarque en tous les cas que la présence du condensateur 4 a un effet bénéfique sur les impulsions de préallumage.

En bref, on note que la présence du condensateur 4 présente les avantages suivants:

1. Elimination de la circulation d'un courant continu dans l'enroulement primaire du transformateur.

2. Meilleure détermination du temps de l'augmentation du courant dans l'enroulement primaire du transformateur, permettant d'assurer la génération de la quantité d'énergie nécessaire au préallumage et permettant de maîtriser l'instant d'applicatdion du préallumage.

3. Maintien de la tension de préallumage au moins pendant la durée nécessaire à une ionisation correcte d'un canal dans le GAP.

4. Restitution au circuit d'usinage de la quantité d'énergie prélevée en excédent.

5. Possibilité, par choix adéquat de la capacité du condensateur 4 et de la valeur de la résistance 5, d'assurer la production de l'impulsion de préallumage durant un bref instant, juste suffisant pour allumer effectivement le canal mais ne risquant pas de provoquer une prolongation excessive de l'effet ionisateur.

L'effet du branchement-série du condensateur 4 est ainsi avantageux par le fait qu'il assure une impulsion de préallumage de puissance adéquate. Toutefois, il est encore autre chose qui contribue à une application rationnelle du principe de préallumage. En effet, malgré le fait qu'on obtient de la façon précitée une génération régulière des impulsions de préallumage, les variations des conditions dans la zone d'usinage elle-même (c'est-à-dire dans le GAP), du fait des fluctuations des caractéristiques du milieu diélectriquetelle qu'une accumulation de résidu d'usinage sous formes de particules conductrices, une formation de gaz, un dépôt de carbone, etc...- peuvent provoquer des variations de la résistance de ce milieu, d'où des fluctuations difficilement maîtrisables de la tension des impulsions de préallumage.

C'est la raison pour laquelle on a prévu dans le circuit selon l'invention une branche d'écrétage de la tension de préallumage, composée en l'occurrence d'une diode Zener 11 (éventuellement plusieurs diodes Zener en série) et d'une résistance 12 en série avec cette diode Zener, l'ensemble de ces éléments étant branché directement aux bornes du GAP.

On obtient ainsi une stabilisation de la tension de l'impulsion de préallumage.

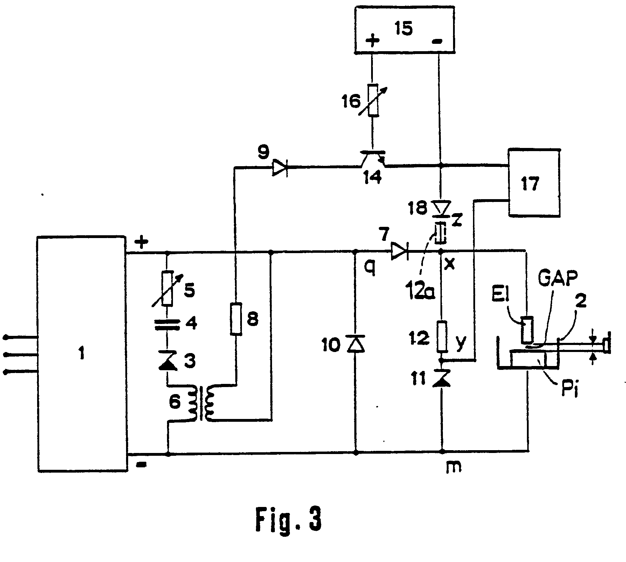

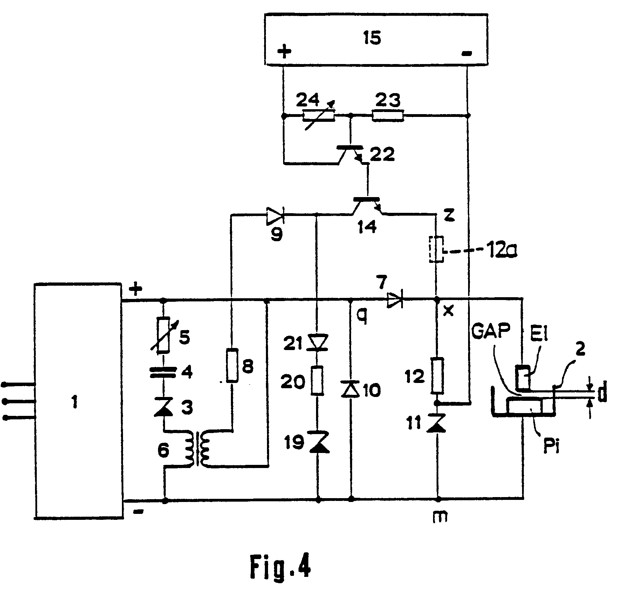

Dans les commentaires énoncés préalablement à la presente description, on a déjà indiqué que le branchement en parallèle de deux éléments ayant une caractéristique de type électro-disruptif n'était pas paradoxal, contrairement aux apparences. Cela est dû d'une part au fait que le GAP ne présente pas une caractéristique électro-disruptive classique et cela est dû également au fait qu'il existe la plupart du temps, d'une façon non représentée au dessin, un dispositif d'asservissement de la position d'électrode, ou de déplacement automatique d'électrode, qui, lorsque se présente une tension donnée pour préallumer un canal, établit substantiellement automatiquement la distance de GAP à la valeur voulue. Dans ce cas, la caractéristique de l'ensemble-série 11, 12 pourrait être non seulement écréteuse, mais stabilisatrice de tension, c'est-à-dire que la chute de tension maximale envisagée aux bornes de la résistance 12 sera petite par rapport à la tension caractéristique de la diode Zener 11. La présence de la résistance 12 s'explique en fait par l'utilisation que l'on en fera dans des perfectionnements qui vont être expliqués plus loin en liaison avec les fig. 3 et 4. On note que, en l'absence - toujours possible - d'un dispositif de positionnement automatique d'électrode, la résistance 12 serait avantageusement rendue plus grande, de façon à établir une chute de tension ohmique propre à partager le courant entre le GAP et la diode Zener 11 même dans le cas où la distance de GAP d ne serait pas tout à fait adéquate.

Avec la branche d'écrétage 11, 12, le circuit de la fig. 2 assure une stabilisation de la tension des impulsions de préallumage. On a vu toutefois que, pour obtenir une très bonne impulsion de préallumage, il était bonde maîtriser également le paramètre de l'énergie de l'impulsion de préallumage. Les autres formes d'exécution que l'on va décrire maintenant respectivement en liaison avec la fig. 3 et avec la fig. 4, fournissent de plus les moyens de maîtriser le paramètre de l'énergie des impulsions de préallumage.

On voit que la forme d'exécution selon la fig. 3 comprend tous les éléments qui se trouvaient à la fig. 2, avec en plus un transistor 14 de limitation du courant de préallumage, une source de tension auxiliaire 15, une résistance variable 16, une diode de non-retour 18 et un appareil de signalisation 17. Le tronçon émetteur-collecteur du transistor 14 est branché en série avec la résistance 8 et la diode 9 déjà considérées en liaison avec la fig. 2. Ce tronçon émetteur-collecteur est commandé par le courant dans le tronçon émetteur-base de ce transistor 14. Ce courant, provenant de la source de tension auxiliaire 15, est ajustable au moyen de la résistance variable 16. Plus exactement, cette résistance variable 16 permet d'établir la valeur maximale de courant qui peut traverser le tronçon émetteur-collecteur du transistor 14, durant l'impulsion de préallumage. Le circuit signalisateur 17 est également alimenté par la source de tension auxiliaire 15 et il comprend une entrée connectée sur le point de connexion entre la diode 11 et la résistance 12, dans la branche d'écrétage déjà considérée en liaison avec la fig. 2.

Le circuit signalisateur 17 peut être conçu de plusieurs manières différentes. Il peut s'agir par exemple d'un voltmètre électronique mémorisant les valeurs de pointe de chute de tension dans la résistance 12, lesquelles sont représentatives des valeurs de pointe du courant d'écrétage. Le circuit signalisateur 17 pourrait également être un oscilloscope faisant apparaître l'évolution du courant d'écrétage, il pourrait encore être un circuit électronique détectant uniquement le fait que la chute de tension sur la résistance 12 (augmentée de la chute de tension quasiment constante sur la diode 18 dans le sens passant) présente des pointes qui dépassent ou ne dépassent pas une valeur de seuil donnée. Selon le cas, un indicateur 17a fournira une indication permettant à un opérateur de connaître l'information voulue quant à la chute de tension dans la résistance 12. Cet indicateur 17a pourrait être par exemple une lampe ou un dispositif optique, indiquant qu'un seuil est dépassé ou non par les pointes du courant d'écrétage, il pourrait également s'agir d'un indicateur numérique, fournissant la valeur même de ce courant, ou encore un indicateur analogique à aiguille, etc.

Avec cette forme d'exécution selon la fig. 3, un opérateur perçoit l'indication fournie par l'organe 17a du circuit signalisateur 17 et il peut régler la résistance variable 16 de façon à diminuer (ou augmenter) la valeur maximale du courant pouvant traverser le tronçon émetteur-collecteur du transistor 14, c'est-à-dire la valeur maximale que peut avoir le courant disponible pour le préallumage.

Le courant que le transistor 14 laisse passer n'est toutefois pas, en tous les cas dans le cas général, le courant total qui passe dans le GAP, étant donné qu'une partie de ce courant passe dans la branche d'écrétage, 11, 12. La répartition du courant de préallumage entre la branche d'écrétage et le GAP est conditionnée par la distance d'du GAP, qui doit être adéquatement établie. Dans la plupart des cas, cette distance de GAP est établie par un dispositif d'asservissement de la position de l'électrode qui donne automatiquement la valeur voulue à cette distance d. On verra plus loin comment un tel dispositif peut, par exemple, être automatiquement commandé. En principe, les conditions sont telles que le courant dans la branche d'écrétage 11, 12 est approximativement du même ordre de grandeur que le courant de préallumage dans le GAP.

La forme d'exécution selon la fig. 3 présente l'avantage d'avoir une "valeur limite du courant de préallumage" qui est établie normalement de façon fixe, selon l'ajustage de la résistance variable 16. Cette valeur limite du courant disponible pour le préallumage est donc en quelque sorte mémorisée par la valeur donnée à la résistance ajustable 16, compte tenu de la tension de la source d'alimentation auxiliaire 15.

Le réglage ou l'ajustage de l'énergie de préallumage disponible (valeur maximum du courant dans le tronçon émetteur-collecteur du transistor 14) est réglé manuellement, d'une façon restant ainsi mémorisée, dans la forme d'exécution selon la fig. 3. Par contre, dans la forme d'exécution selon la fig. 4, ce réglage intervient automatiquement, une limitation du courant dans le tronçon émetteur-collecteur du transistor 14 n'intervenant que lorsque le courant dans la résistance 12, c'est-à-dire le courant d'écrétage, dépasse une certaine valeur limite. Pour cela, dans la forme d'exécution selon la fig. 4, on a à nouveau le transistor 14 dont le tronçon émetteur-collecteur est apte à limiter la valeur du courant disponible pour le préallumage (c'est-à-dire la somme du courant d'écrétage et du courant de préallumage). Par contre, dans cette forme d'exécution selon la fig. 4, le transistor 14 est commandé à l'aide d'un circuit comprenant un transistor 22, de commande d'asservissement de courant de préallumage, une source de tension auxiliaire 15, une résistance fixe 23 et une résistance ajustable 24. Une connexion de la résistance 23 est reliée au pôle négatif de la source de tension auxiliaire 15, et est reliée en même temps au point de connexion entre la diode Zener 11 et la résistance 12, dans la branche d'écrétage. La résistance 23 est avant tout une résistance de neutralisation du courant de fuite des transistors 14 et 22. Lorsqu'aucun courant ne traverse la résistance 12, le pôle négatif de la source d'alimentation auxiliaire 15 est au même potentiel que l'électrode-outil El, c'est-à-dire que la quasi totalité de la tension de la source auxiliaire 15 est appliquée à la résistance variable 24. Le transistor 22 est monté, comme on le voit en "emitter-follower" et le courant qui est délivré par l'émetteur du transistor 22 est approximativement égal (du moment que l'on peut considérer dans la résistance 23 comme pratiquement négligeable) au quotient de la tension de la source auxiliaire 15 par la valeur de la résistance variable 24, multiplié par le coefficient d'amplification du transistor 22. C'est ce courant, issu de l'émetteur du transistor 22, qui commande le transistor 14 par son tronçon émetteur-base. Lorsqu'une chute de tension se produit sur la résistance 12, le pôle négatif de la source de tension auxiliaire 15 passe à un potentiel inférieur par rapport à celui de l'électrode-outil El, et la tension qui reste appliquée sur la résistance variable 24 diminue d'autant, provoquant automatiquement une diminution du courant qui commande le transistor 14. Si la chute de tension dans la résistance 12 devient grande, le transistor 22 pourrait même être bloqué complètement, bloquant également le transistor 14, mais justement à ce moment-là le courant dans la résistance 12 diminuerait forcément, ce qui fait que l'état de blocage n'arrive pas à se produire et que l'on tend vers une situation "stabilisée par effet de réaction". La valeur du courant dans la résistance 12 pour laquelle cette situation stabilisée intervient peut, comme on le comprend aisément en appliquant les règles des circuits électroniques, être réglée à l'aide de la résistance variable 24.

En fonctionnement la valeur maximale du courant autorisé à traverser le tronçon émetteur-collecteur du transistor 14 n'est pas établie de façon fixe, comme dans le cas de la forme d'exécution selon la fig. 3, mais elle est, a priori, très élevée. Ce n'est qu'au moment où un important courant d'écrétage intervient que cette valeur limite de courant dans le transistor 14 est réduite, par l'effet du transistor 22 et des éléments qui lui sont associés.

L'avantage du circuit selon la fig. 4 est que, si le courant d'écrétage a tendance à augmenter, la limitation du courant à travers le transistor 14 devient automatiquement plus sévère, ce qui fait que le circuit s'adapte automatiquement aux différentes conditions pouvant se présenter (par exemple dans le cas d'une ionisation "hésitante", au moment où l'électrode-outil est éloignée de la pièce à usiner). Un effet avantageux du circuit de limitation automatique du courant disponible pour le préallumage, selon la fig. 4, consiste en ce que, au moment où l'électrode-outil est, pour une raison ou pour une autre, éloignée de la pièce, l'interruption des impulsions de préallumage est franche, il n'y a pas une période où se produisent des préallumages "à la limite du possible", qui n'ouvre qu'un canal ionisé de mauvaise qualité.

A la fig. 4, on a également prévu, mais d'une manière qui ne serait pas obligatoire, une première branche de semi-écrétage 19, 20, 21, qui agit en amont du transistor 14, mais en aval de la résistance 8 et de la diode 9. Il a été constaté que l'effet de la limitation automatique d'énergie commandée par le transistor 22 était plus efficace si la tension disponible était déjà préalablement écrétée, et c'est le rôle de la branche d'écrétage préalable 19, 20. Il est toutefois bien clair que la chute de tension totale dans la diode Zener 19 et la résistance 20 doit forcément être supérieure à la chute de tension totale dans la diode 11 et la résistance 12, sinon l'effet de la branche d'écrétage proprement dite, 11, 12, serait nul. De toute façon, la diode 21, prévue à toutes fins utiles, n'est pas indispensable, même dans le cas où l'on prévoit la branche d'écrétage préalable (ou de semi-écrétage préalable) comprenant la diode Zener 19 et la résistance 20.

Le circuit selon la fig. 4 assure une maîtrise complète et automatique des paramètres électriques de l'impulsion de préallumage, à savoir la tension de pointe de celle-ci et de l'énergie disponible pour le préallumage.

La fig. 5 représente une modification possible, et au moins en certains cas avantageuse, selon laquelle peuvent être agencés les éléments qui commandent le passage du courant dans l'enroulement primaire du transformateur qui fournit les impulsions de préallumage. Dans la variante selon la fig. 5, on retrouve, en 3', 4', 5' et 6', les éléments homologues 3-6 des fig. 2, 3 et 4, mais selon une disposition différente.

A la fig. 5, on a prévu un transistor 25 muni d'une résistance de neutralisation du courant de fuite 26, qui est commandé par sa base par le branchement-série d'une diode Zener 3', correspondant à la diode 3 des fig. 2 à 4, et d'un condensateur 4', correspondant au condensateur 4 des fig. 2 à 4. Par ailleurs, en série sur le tronçon émetteur-collecteur de ce transistor 25, se trouve disposé l'enroulement primaire du transformateur, dénommé ici 6', lui-même en série avec une résistance d'ajustage 5', correspondant à la résistance 5 des fig. 3 et 4. Une résistance 27 est branchée aux bornes du montage-série comprenant l'enroulement primaire du transformateur 6' et la résistance ajustable 5', de façon à former une voie permettant, si nécessaire, le passage d'un courant de démagnétisation du transformateur 6'. La variante de schéma selon la fig. 5 présente, similairement aux schémas selon les fig. 2 à 4, la propriété selon laquelle, du fait de la présence d'un élément évitant une liaison galvanique directe (en l'occurrence le condensateur 4' correspondant au condensateur 4 des fig. 2 et 4), aucun courant ne circule d'une façon permanente ou semi-permanente dans les moyens de préallumage, ceux-ci n'étant le siège d'aucun courant qui sérait étranger à la fonction de génération des impulsions de préallumage. Par contre, la variante de schéma selon la fig. 5 permet l'application aux bornes de l'enroulement primaire du transformateur d'une tension pratiquement égale à la tension délivrée par le circuit 1 qui l'alimente, cette tension appliquée à l'enroulement primaire n'étant pas, comme dans le cas des fig. 2 à 4, diminuée au moins de la tension Zener de la diode Zener 3 ou 3'. Ceci permet l'utilisation d'un transformateur à rapport de transformation moins élevé. A la limite, compte tenu du fait que l'impulsion de préallumage est ajoutée à la tension fournie par le circuit 1 d'alimentation en tension érosive, le transformateur 6' pourrait n'être même pas élévateur de tension, puisque, en principe, il suffit que la tension de préallumage soit au moins notablement supérieure à la tension des impulsions électro-érosives. En pratique, comme la tension de préallumage est de préférence supérieure au double de la tension des impulsions érosives, le transistor 6' sera malgré tout au moins légèrement élévateur de tension, mais ce n'est pas une necessite absolue.

A la fig. 5, on a encore représenté, en traits pointillés, une possibilité de complément qui peut être intéressante. Il s'agit de la partie de circuit qui comprend une résistance 28 en série avec la résistance 27, un transistor 29 dont le tronçon émetteurbase est connecté en série sur la résistance 28 et d'une résistance 30 constituant une résistance de charge branchee sur le collecteur du transistor 29. Un condensateur de couplage 31 relie de plus le collecteur du transistor de réaction 29 avec l'électrode de base du transistor de commande d'allumage 25. Du fait de ce montage, lorsque le transistor 25 est devenu conducteur, le transistor 29 l'est également et, par l'intermédiaire du condensateur 31, cet état de conduction est maintenu au moins durant la durée de charge de ce condensateur 31 même si le courant a travers la diode Zener 3' et le condensateur 4' n'était même plus suffisant pour commander à lui seul la conduction du transistor de commande de préallumage 25.

On remarque que le circuit de la fig. 5, aussi bien avec l'adjonction dessinée en pointillés que sans celle-ci, est un circuit du type qui ne consomme aucun courant au repos.

A la fig. 5, on a encore représenté, en 32, la possibilité, susceptible d'être fort intéressante, de prévoir une connexion d'entrée supplémentaire provoquant, sur demande, l'émission d'une impulsion de préallumage supplémentaire. A la fig. 5, on a représenté la possibilité d'amener la commande d'impulsion de préallumage supplémentaire 32 sur l'électrode de base du transistor de couplage de réaction 29, mais il est clair que l'on pourrait amener cette impulsion de commande supplémentaire en un quelconque autre point du circuit.

On remarque que, avec les composants de circuit dessinés en pointillés, le schéma de la fig. 5 donne aux moyens de commande de préallumage le fonctionnement caractéristique d'une bascule monostable, ce qui peut permettre par exemple de calibrer en temps l'impulsion de préallumage d'une façon indépendante de la commande fournie par l'intermédiaire de la diode Zener 3, 3' et du condensateur 4, 4', commande qui, elle, est d'une certaine façon dépendante de l'évolution de la tension délivrée sur les bornes de sortie du circuit 1, qui fournira l'impulsion érosive.

Il y a lieu de considérer encore les fig. 6 et 7. Ces deux figures se composent chacune d'un schéma de principe (partie supérieure) et d'un diagramme d'évolution des tensions et des courants (partie inférieure). La fig. 6 illustre le fait que, en tant que circuit de délivrance des décharges érosives, on peut utiliser un circuit du type "à relaxation", tel que, sans égard aux questions de préallumage, l'art antérieur en connaissait, notamment par l'exposé de brevet USA précédemment cité. Aux bornes a, b, a', b' de la fig. 6, se trouve branché l'agencement de préallumage, tel que représente aux fig. 2 a 4.

La partie inférieure de la fig. 6 montre comment évoluent, d'une part, la tension et, d'autre part, le courant dans le GAP. La tension, établie aux bornes du condensateur principal de délivrance d'impulsions (ou condensateur d'usinage) croît d'abord jusqu'à une valeur $U_f$, à laquelle se déclenche le processus du préallumage. La tension passe alors par la valeur $U_{pr}$ qui constitue la tension de pointe de préallumage, puis, le canal étant allumé, cette tension redescend à une valeur relativement basse, de l'ordre de 20 à 30 V, où elle se maintient, avec une évolution substantiellement plate, jusqu'à la fin de l'impulsion. Par ailleurs, le courant commence de croître progressivement au moment où le canal a été allumé par la pointe de tension $U_{pr}$, et il suit une évolution correspondant substantiellement a une alternance d'une sinusoïde, passant par un maximum pour revenir ensuite à zéro. Au moment où ce courant revient à zéro, le canal se déionise et il ne peut pas circuler de courant dans le sens inverse (cela serait de toute façon empéché par

les diodes 7 et 10).

A la partie supérieure de la fig. 6, on remarque encore qu'il y a, en série avec le condensateur principal d'usinage, une bobine d'induction réglable qui est chargée de supporter l'à-coup de tension qui se produit au moment où le canal vient d'être allumé. Cette impédance inductive contribue ainsi à "adoucir" les sauts de courant qui sinon seraient excessivement grands.

La fig. 7 illustre, d'une façon analogue à la fig. 6, la possibilité de faire délivrer les décharges électro-érosives non pas par un circuit à condensateur, c'est-à-dire principalement du type à relaxation, mais par un circuit électronique comprenant des commutations "en" et "hors", appliquées à la sortie d'une source d'énergie apte à délivrer une tension adéquate (tension $U_f$) pour commander le préallumage, et un courant suffisamment élevé pour constituer l'impulsion électro-érosive, la tension étant alors bien sûr chutée pour correspondre à la tension d'entretien du courant d'impulsions érosives.

La partie inférieure de la fig. 7 montre que, avec l'utilisation d'un tel circuit électronique de délivrance des décharges électro-érosives, le fonctionnement du circuit de préallumage n'est pratiquement pas modifié. Par contre, les impulsions de courant érosif sont, comme on le voit, beaucoup plus "carrées".

Les points de connexion a, b, a' et b' de la fig. 7 sont, comme les points homologues de la fig. 6, destinés à l'insertion de la partie de circuit concernant le préallumage.

On a parlé, à plusieurs reprises, des moyens de positionnement de l'électrode-outil, qui existent dans la quasi totalité des machines d'usinage par électro-érosion, et qui, naturellement sont normalement également présents dans la machine commandée par le circuit selon l'invention. On a même dit que c'est la présence de ces moyens d'asservissement de position d'électrode-outil qui permettent au système d'écrétage de développer tous ses effets avantageux, notamment dans le cas où la résistance 12 est de faible valeur et où la branche d'écrétage, formée essentiellement de la diode Zener 11, a non seulement une caractéristique réductrice de tension, mais une caractéristique stabilisatrice de tension.

D'une façon générale, les moyens de positionnement de l'électrode-outil comprennent un moteur qui est commandé pour rapprocher l'électrode de la pièce ou pour l'en éloigner. Ce moteur est commandé par des moyens classiques; pour déterminer son fonctionnement, on a en général des moyens qui réagissent à différents paramètres, électriques, voire mécaniques, pouvant être appréhendés sur le circuit ou la machine.

Substantiellement, on distingue trois situations, celle où un rapprochement de l'électrode est nécessaire (le moteur tourne dans un sens), celle où aucun mouvement de l'électrode n'est nécessaire (le moteur est à l'arrêt), et celle où un éloignement de l'électrode est nécessaire (le moteur tourne dans l'autre sens).

Ci-après, on va mentionner quelques-unes des nombreuses méthodes selon lesquelles différents paramètres peuvent être traités comme critères pour déterminer la commande du moteur de positionnement d'électrode. Une première méthode que l'on va décrire convient aussi bien pour les machines selon l'art antérieur que pour les machines dont le circuit correspond à l'invention; une autre méthode, possible pour l'art antérieur, n'est pas applicable pour une machine ayant un circuit tel que celui que l'invention propose, mais, moyennant des modifictions, cette deuxième méthode peut s'appliquer au circuit selon l'invention, et alors elle constitue une méthode particulièrement avantageuse pour commander le moteur de positionnement d'électrode. Au dessin, on a marqué, en différents endroits, des indications x, y, z, m, q et w. C'est aux tensions qui se présentent respectivement entre certains de ces points que l'on peut se référer, en tant que critère pour commander le positionnement de l'électrode. On notera qu'en désignant une tension par deux des points susmentionnés, on désignera la tension du premier de ces points par rapport au deuxième de ces points (par exemple, la tension xy et la tension sur la résistance 12, x étant positif par rapport à y).

La première méthode pour déterminer les commandes nécessaires du moteur de positionnement d'électrode consiste à saisir tout d'abord comme information le signal qx (fig. 2 à 4) ou mw (fig. 1). Si ce signal est constamment positif, cela signifie qu'il y très probablement un court-circuit ou un arc dans le GAP, et il y a lieu de commander un éloignement de l'électrode. Si ce signal est constamment nul ou négatif, cela signifie qu'il n'y a jamais de courant significatif dans le GAP et il convient de commander un rapprochement de l'électrode. Enfin, si l'on a des impulsions de tension positive, séparées par des intervalles de temps avec tension nulle ou négative, il convient de considérer, comme second critère, le signal xm (fig. 1-4). Si ce signal présente des impulsions dont la pointe atteint une valeur voisine d'une valeur de consigne (désignée comme étant $V_{cs}$), cela signifie que la distance de GAP est convenable et le moteur doit rester immobile. Si ce signal xm présente des pointes de tension qui restent toutefois notablement inférieures à la dite valeur de consigne $V_{cs}$, cela signifie que la distance de GAP est trop petite et qu'il convient d'actionner le moteur pour éloigner l'électrode. Au contraire, si les pointes de tension du signal xm sont notablement supérieures à la dite valeur de consigne $V_{cs}$, c'est qu'il faut commander le moteur pour qu'il provoque une diminution de la distance de GAP.

On note que la possibilité d'une absence d'impulsion dans le signal xm n'existerait que dans les deux cas où la situation est déjà déterminée par le signal qx (ou mw), et où le signal xm n'intervient pas.

Une autre méthode de commande, praticable selon l'art antérieur, consiste à n'utiliser que le signal xm et à effectuer uniquement la détermination que la première méthode faisait subsidiairement, en fonction de ce signal xm. On note toutefois que l'on peut alors avoir des cas où il n'apparaît aucune impulsion sur le signal xm. Cela peut tout aussi bien correspondre à un court-circuit dans le GAP, réclamant un éloignement de l'électrode, qu'à une tension d'alimentation trop basse, réclamant un rapprochement de l'electrode. Pour sortir de cette difficulté, on prévoyait d'effectuer dans ce cas tout d'abord un éloignement de l'électrode qui, de toute façon, supprime les courts-circuits et supprime les décharges dans le gap, suivi d'un rapprochement progressif de l'électrode, jusqu'à ce que les impulsions reprennent normalement.

On remarque toutefois que cette seconde méthode, applicable selon l'art antérieur, n'est pas applicable telle que présentée avec un circuit conforme à l'invention (fig. 2 à 4). En effet, dans ce cas, la tension de consigne $V_{cs}$ sera naturellement la tension Zener de la diode 11, et le signal xm ne pourra jamais dépasser notablement cette valeur de consigne. Pourtant cette seconde méthode présentait l'avantage de n'avoir pas à mesurer une chute de tension sur une diode telle que la diode 7 (fig. 2 à 4) ou la diode $D_2$ (fig. 1).

Le circuit selon l'invention fournit toutefois une possibilité fort avantageuse de pratiquer une méthode voisine de la seconde méthode précédemment considérée, mais utilisant un autre critère pour connaître les situations ou l'électrode doit être éloignée. Aux fig. 2 à 4, on voit que l'on a dessiné, en traits pointillés, une résistance 12a qui se trouve en série sur l'amenée de la tension et du courant de préallumage. Cette résistance supplémentaire a approximativement la même valeur que la résistance 12. On peut mesurer alors les deux tensions zx et xy. Si ces deux mesures donnent au moins approximativement la même valeur de courant, cela signifie que tout le courant délivré par l'enroulement secondaire du transformateur 6 est dirigé sur la branche d'écrétage 11, 12, c'est-à-dire que le GAP est pas sujet à une impulsion de préallumage active (la tension apparaît peut-être mais elle est insuffisante à établir le préallumage). On en déduit qu'il faut commander le moteur pour qu'il provoque un rapprochement de l'électrode-outil.

De plus, concernant l'indétermination qui existait dans l'art antérieur et nécessitait un "va-et-vient" de l'électrode-outil, on note que, dans le circuit selon l'invention, le cas dans lequel aucune impulsion ne se présente sur le signal xm peut être tout d'abord traité, en admettant que l'on ait la variante selon la fig. 5 y compris ce qui est dessiné en traits pointillés, par l'envoi d'une impulsion sur la connexion 32, de manière que le circuit tente de provoquer l'application d'une impulsion de préallumage supplémentaire. Si cette impulsion intervient et qu'elle provoque effectivement le préallumage, le processus d'usinage se poursuivra normalement, il y aura au plus lieu d'effectuer une correction d'éloignement de l'électrode, si l'impulsion xm est trop faible. Si aucune impulsion n'intervient après l'application d'une impulsion de commande sur la connexion d'entrée 32 (fig. 5), c'est que l'on se trouve vraisemblablement en présence d'un court-circuit et il convient alors de provoquer un éloignement de l'électrode. Enfin, si l'impulsion de préallumage se produit mais qu'elle ne provoque aucun allumage effectif du canal, on aura alors certainement la détection, au moyen des deux signaux zx et xy, de la situation précédemment mentionnée dans laquelle il y a lieu de rapprocher l'électrode. Ainsi, avec le circuit selon la présente invention, en utilisant uniquement les tensions sur les points x, y, z, m on peut réaliser une commande automatique à la fois fort simple et fort avantageuse du dispositif (à moteur) de positionnement de l'électrode-outil (EI) par rapport à la pièce à usiner (Pi). Dans le cas où la possibilité de commander une tentative d'envoi d'impulsions de préallumage n'existe pas, le cas de l'absence d'impulsions dans le signal xm pourra naturellement être traité comme il l'était selon l'art antérieur. Toutefois, il est à noter que, avec le circuit selon l'invention, le risque que cette situation difficile-là se présente est extrêmement faible.

Il faut encore noter que dans le système de préallumage selon les schémas fig. 2, 3 et 4, dès que le canal est ionisé, l'énergie de l'impulsion de préallumage, générée dans le secondaire du transformateur 3, a tendance à passer par ce canal hautement conducteur, en un temps très court. De ce fait, l'intensité du courant de cette impulsion peut atteindre des valeurs assez élevées.

Ceci a une double conséquence:

a) L'impulsion de préallumage étant d'une très courte durée, l'intensité du courant de cette impulsion ne peut pas être valablement réglée par le transistor 14 (fig. 3 et 4) qui est commandé par la différence du potentiel aux bornes de la résistance 12 de la branche d'écrétage de la tension, la pente de l'accroissement du courant étant trop raide. L'impulsion de préallumage devient ainsi une impulsion d'une tension élevée et d'une grande intensité du courant. Ceci pourrait conférer à l'impulsion un caractère d'impulsion érosive impliquant une forte usure de l'électrode.

b) Si l'on diminue l'intensité du courant de l'impulsion de préallumage en diminuant simplement l'énergie de cette impulsion, sa durée restera quand même très courte. L'arrêt rapide du courant de cette impulsion peut alors créer un délai entre la fin de l'impulsion de préallumage et le début de l'impulsion érosive. Ceci peut donner lieu à une désionisation partielle ou même totale du canal de sorte que l'impulsion érosive, alimenté par une tension inférieure à celle de l'impulsion de préallumage, ne pourra pas passer. Il s'en suit alors des "ratés", c'est-à-dire que les impulsions de préallumage ne sont pas toujours suivies des impulsions érosives.

L'expérience montre que la ionisation du canal peut être maintenue même par un courant de très faible intensité. Mais, d'autre part, il faut que la ionisation créée par l'impulsion de préallumage soit maintenue un temps suffisamment long pour être reprise par le courant de l'impulsion érosive. Ceci peut être assuré par l'insertion dans le secondaire du transformateur 6 (fig. 2, 3, 4) d'une résistance 12a d'une valeur notable, propre à atténuer l'intensité du courant de l'impulsion et prolonger ainsi sa durée.

Ainsi, la ionisation du canal sera effectuée avec une impulsion d'une tension élevée et d'une faible intensité du courant et l'ionisation sera facilement maintenue avec le courant du début de l'impulsion érosive, même si la pente de ce courant (di/dt) est très faible. Le processus est alors continu et stable sans "ratés" ni variations de l'énergie des impulsions érosives.

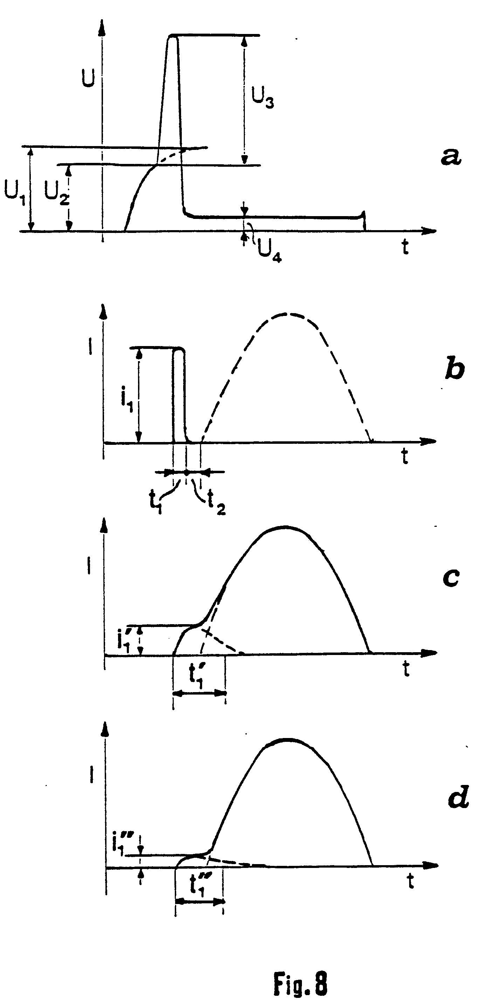

Ce phénomène est représenté sur la fig. 8a, b, c et d.

La fig. 8a montre la forme de la tension entre l'électrode et la pièce, où $U_1$ est la tension à laquelle s'enclenche l'alimentation des impulsions de préallumage (tension de la diode Zener 3 (fig. 2, 3 et 4), $U_3$ est la tension de l'impulsion de préallumage (générée dans le secondaire du transformateur 6) et $U_4$ est la tension de l'arc de la décharge (ou la tension sous laquelle passe le courant de l'impulsion érosive).

La fig. 8b montre le courant de l'impulsion de préallumage dans le cas où la résistance 12a n'est pas insérée dans le circuit. Le courant de l'impulsion de préallumage $i_1$ est alors fort élevé et sa durée $t_1$ est fort courte. De ce fait, le courant de l'impulsion érosive ne peut pas suivre immédiatement l'impulsion de préallumage, de sorte qu'un délai $t_2$ se présente. Il peut en résulter des "ratés" des impulsions érosives.

La fig. 8c montre le phénomène avec l'insertion de la résistance 12a. L'intensité du courant de l'impulsion de préallumage $i_1$ se trouve diminuée et sa durée $t_1$ prolongée. La reprise de l'ionisation effectuée par l'impulsion de préallumage est reprise de façon assurée par le courant de l'impulsion érosive. Toutefois la courbe du courant de cette impulsion est légèrement déformée.

La fig. 8d représente les mêmes conditions, mais avec une valeur de la résistance 12a plus élevée. Le rapport entre la tension et le courant de l'impulsion de préallumage reste toujours valable pour une bonne ionisation du canal, mais la courbe du courant de l'impulsion érosive ne subit qu'une déformation minime, qui ne saurait avoir d'influence sur les caractéristiques de cette impulsion. On note que $i_1$ et $t_1$ sont respectivement le courant de l'impulsion de préallumage et sa durée efficace.

Dans ces conditions, le réglage du courant des impulsions de préallumage par le transistor 14 devient plus efficace. L'énergie de chaque impulsion de préallumage se règle automatiquement à la valeur optimale, juste suffisante pour produire une bonne ionisation du canal et assurément exempte de risques quant à l'effet érosif des impulsions d'usinage.

Ainsi, le système de préallumage réalise d'une façon particulièrement avantageuse un véritable contrôle adaptatif en laissant intacts les paramètres des impulsions érosives.

**Revendications**

1. Circuit électrique pour machine d'usinage par électro-érosion travaillant une pièce (Pi) par décharges électro-érosives en milieu diélectrique, dans un espace d'usinage (GAP, d) entre une électrode-outil (El) et la dite pièce (Pi) qui constitue aussi elle-même une électrode, comprenant des moyens de délivrance de décharges érosives (1), ayant des bornes de sortie qui fournissent respectivement sur les dites électrodes (El, Pi) des impulsions d'énergie électrique érosives, et des moyens de préallumage (6, 3, 9, ...; 6', 3',...) pour fournir, chaque fois en prologue à une dite impulsion érosive des impulsions de préallumage qui ont une tension plus élevée et une énergie plus faible que les dites impulsions érosives, et qui allument, c'est-à-dire ionisent, dans l'espace d'usinage (GAP, d) au sein du fluide diélectrique, chaque fois un canal qui est ensuite parcouru par la décharge érosive, caractérisé en ce qu'il comprend des moyens d'écrétage (11, 12) agencés pour réduire la tension des dites impulsions de préallumage sur les dites électrodes (El, Pi) lorsqu'elle dépasse une valeur de consigne.

2. Circuit selon la revendication 1, pour une machine d'usinage par électro-érosion munie de moyens qui commandent le positionnement de l'électrode-outil (El) pour établir adéquatement la distance d'usinage (d) c'est-à-dire la dimension (d) du dit espace d'usinage (GAP) entre les deux électrodes (El, Pi), caractérisé en ce que les dits moyens d'écrétage (11, 12) comprennent au moins un composant (11) à caractéristique limitatrice de tension, dont la valeur de tension limite correspond substantiellement à la dite valeur de consigne, ce ou ces composants étant branchés sur les dites électrodes (El, Pi) et/ou sur les connexions de sortie des dits moyens de préallumage (6, 3, 9, ...) par des voies de conduction substantiellement exemptes d'obstacle chutant la tension, c'est-à-dire comportant au plus des éléments (12, ...) n'impliquant aucune chute de tension notable relativement à la dite valeur de tension limite.

3. Circuit selon la revendication 1, caractérisé en ce que les dits moyens de préallumage (6, 3, 9) sont munis en outre de moyens limiteurs (14) permettant de réduire l'énergie disponible pour chaque impulsion de préallumage.

4. Circuit selon la revendication 1 ou la revendication 2, dans lequel les dits moyens de préallumage comprennent un agencement (3-6) qui engendre, et délivre à sa sortie, chaque impulsion de préallumage avec une énergie finie, caractérisé en ce que des dits moyens de préallumage comprennent en outre des moyens limiteurs d'énergie de préallumage, lesquels comprennent, en série avec la sortie du dit agencement, un élément commandé (14) du type transistor, qui réduit l'énergie disponible dans l'impulsion de préallumage, laquelle énergie dépend aussi des paramètres de temps et de tension de l'impulsion, celui de tension restant par ailleurs soumis à l'action des dits moyens d'écrétage (11, 12).

5. Circuit selon la revendication 4, caractérisé en ce qu'il comprend un circuit signalisateur (17) connecté aux dits moyens d'écrétage (11, 12) et fournissant une indication perceptible relative au courant traversant ces derniers, et un composant manuellement ajustable (16) qui agit sur le dit élément commandé (14) et permet d'établir la limite de conduction de ce dernier en dépendance de la dite indication perceptible fournie par le dit circuit signalisateur (17).

6. Circuit selon la revendication 4, caractérisé en ce qu'il comprend des moyens de limitation automatiques d'énergie de préallumage (12, 15, 22, 23, 24) agencés pour commander le dit élément commandé (14) automatiquement de façon qu'il diminue sa conduction lorsque le courant dans les dits moyens d'écrétage dépasse une valeur donnée.

7. Circuit selon la revendication 6, caractérisé en ce que les dits moyens de limitation automatiques d'énergie de préallumage (12, 15, 22, 23, 24) comprennent un composant manuellement ajustable (24) qui permet de régler à volonté la dite valeur donnée du courant dans les moyens d'écrétage, cette valeur étant fournie par une résistance (12) branchée en série avec une diode Zener (11) pour constituer les dits moyens d'écrétage.

8. Circuit selon la revendictation 1, caractérisé en ce que les dits moyens de préallumage (6, 3, 9; 6', 3', ...) sont connectés aux dits moyens de délivrance de décharges érosives (1), de façon qu'un constituant à seuil de tension (3; 3') des moyens de préallumage reconnaisse l'instant où une certaine valeur de tension est présente aux bornes de sortie des dits moyens de décharges érosives (1), et que l'impulsion de préallumage intervienne à cet instant-là.

9. Circuit selon la revendication 8, caractérisé en ce que les dits moyens de préallumage sont non seulement commandés mais aussi alimentés par les bornes de sortie des dits moyens de délivrance de décharges érosives (1), ces moyens de préallumage comprenant un transformateur-élévateur de tension (6), et, en série avec l'enroulement primaire de ce transformateur (6), le tout blanché aux dites bornes de sortie des dits moyens de délivrance de décharges érosives (1), une partie de circuit de commande de préallumage (3, 4, 5; 3', 4', 26, 25, 27, 5') comprenant le dit constituant à seuil de tension (3; 3') et un condensateur (4; 4'), ce condensateur ayant pour effet d'empêcher le passage d'un courant étranger à la génération des impulsions de préallumage dans le dit enroulement primaire.

10. Circuit selon la revendication 9, caractérisé en ce que la dite partie de circuit de commande de préallumage consiste en une branche de circuit qui se trouve en série avec le dit enroulement primaire du dit transformateur (6), et qui comprend en série au moins le dit condensateur (4) et le dit constituant à seuil de tension (3), ce dernier étant formé d'au moins une diode Zener.

11. Circuit selon la revendication 9, caractérisé en ce que la dite partie de circuit de préallumage comprend un transistor (25) de commande de préallumage dont la base est connectée, pour la commande de la conduction de son tronçon émetteur-collecteur, à une branche de circuit comprenant en série le dit condensateur (4') et le dit élément à tension de seuil (3'), le dit enroulement primaire du transformateur (6') étant connecté en série avec le tronçon émetteur-collecteur du dit transistor (25) pour en recevoir des impulsions de courant, sous la dite commande.

12. Circuit selon la revendication 11, caractérisé en ce que la dite partie de circuit de commande de préallumage comprend en outre une boucle active de réaction impulsionnelle (27-31) comprenant un transistor d'amplification de réaction (29) apte à appliquer, par l'intermédiaire d'un condensateur de réaction (31), une impulsion de bouclage réactif sur la connexion de base du transistor (25) de commande de préallumage, pour donner à la dite partie de circuit de commande de préallumage la caractéristique de fonctionnement d'une bascule monostable.

13. Circuit selon la revendication 12, caractérisé en ce qu'il comprend, connecté à un des transistors de la dite partie de circuit de commande de préallumage, une entrée (32) sur laquelle peut être appliqué un signal qui, indépendamment de l'évolution de la tension sur les dites bornes de sortie des dits moyens de délivrance de décharges érosives, tend à provoquer un double basculement supplémentaire de ces transisors, en fonctionnement de bascule monostable, pour engendrer une impulsion de préallumage supplémentaire, le dit signal étant appliqué sur constatation d'une absence indésirée de préallumage.

14. Circuit électrique pour machine d'usinage par électro-érosion travaillant une pièce (Pi) par décharges électro-érosives en milieu diélectrique, dans un espace d'usinage (GAP, d) entre une électrode-outil (EI) et la dite pièce (Pi) qui constitue aussi elle-même une électrode, comprenant des moyens de délivrance de décharges érosives (1), ayant des bornes de sortie qui fournissent respectivement sur les dites électrodes (EI, Pi) des impulsions d'énergie électrique-érosives, et des moyens de préallumage (6, 3, 9, ...; 6'. 3',...) pour fournir, chaque fois en prologue à une dite impulsion érosive, des impulsions de préallumage qui ont une tension plus élevée et une énergie plus faible que les dites impulsions érosives, et qui allument, c'est-à-dire ionisent, dans l'espace d'usinage (GAP, d) au sein du fluide diélectrique, chaque fois un canal qui est ensuite parcouru par la décharge érosive, caractérisé en ce que les dits moyens de préallumage (6, 3, 9; 6',3',...) sont connectés aux dits moyens de délivrance de décharges érosives (1), de façon qu'un constituant à seuil de tension (3; 3') des moyens de préallumage reconnaisse l'instant où une certaine valeur de tension est présente aux bornes de sortie des dits moyens de décharges érosives (1), et que l'impulsion de préallumage intervienne à cet instant-là.

15. Circuit selon la revendication 14, caractérisé en ce que les dits moyens de préallumage sont non seulement commandés mais aussi alimentés par les bornes de sortie des dits moyens de délivrance de décharges érosives (1), ces moyens de préallumage comprenant un transformateur-élévateur de tension (6), et, en série avec l'enroulement primaire de ce transformateur (6), le tout branché aux dites bornes de sortie des dits moyens de délivrance de décharges érosives (1), une partie de circuit de commande de préallumage (3, 4, 5; 3', 4', 26, 25, 27, 5') comprenant le dit constituant à tension de seuil (3; 3') et un organe de transmission sans contact direct (4, 4') apte à empêcher le passage dans le dit enroulement primaire, d'un courant étranger à la génération des impulsions de préallumage.

16. Circuit selon la revendication 15, caractérisé en ce que le dit organe de transmission sans contact direct est un condensateur (4; 4').

17. Circuit selon la revendication 16, caractérisé en ce que la dite partie de circuit de commande de préallumage consiste en une branche de circuit qui se trouve en série avec le dit enroulement primaire du dit transformateur (6), et qui comprend en série au moins le dit condensateur (4) et le dit constituant à seuil de tension (3), ce dernier étant formé d'au moins une diode Zener.

18. Circuit selon la revendication 17, caractérisé en ce que la dite branche-série comprend de plus une résistance ajustable (5) par laquelle peut être modifiée l''evolution du courant dans le dit enroulement primaire durant l'impulsion de préallumage.

19. Circuit selon la revendication 16, caractérisé en ce que la dite partie de circuit de commande de préallumage comprend un transistor (25) de commande de préallumage dont la base est connectée, pour la commande de la conduction de son tronçon émetteur-collecteur, à une branche de circuit comprenant en série le dit condensateur (4') et le dit élément à tension de seuil (3'), le dit enroulement primaire du transformateur (6') étant connecté en série avec le tronçon èmetteur-collecteur du dit transistor (25) pour en recevoir des impulsions de courant, sous la dite commande.

20. Circuit selon la revendication 19, caractérisé en ce que la dite partie de circuit de commande de préallumage comprend en outre une boucle active de réaction impulsionnelle (27-31) comprénant un transistor d'amplification de réaction (29) apte à appliquer, par l'intermédiaire d'un condensateur de réaction (31), une impulsion de bouclage réactif sur la connexion de base du transistor (25) de commande de préallumage, pour donner à la dite partie de circuit de commande de préallumage la caractéristique de fonctionnement d'une bascule monostable.

21. Circuit selon la revendication 20, caractérisé en ce qu'il comprend, connecté à un des transistors de la dite partie de circuit de commande de préallumage, une entrée (32) sur laquelle peut être appliqué un signal qui, indépendamment de l'évolution de la tension sur les dités bornes de sortie des dits moyens de délivrance de décharges érosives, tend à provoquer un double basculement supplémentaire de ces transistors, en fonctionnement de bascule monostable, pour engendrer une impulsion de préallumage supplémentaire, le dit signal étant appliqué sur constatation d'une absence indésirée de préallumage.

22. Circuit selon l'une des revendications 1, 8, 9, 10, 11, 14, 15, 17, 19, caractérisé en ce que les dits moyens de délivrance de décharges érosives (1) comprennent un condensateur d'usinage se chargeant et se déchargeant périodiquement selon un mode de fonctionnement à relaxation, des moyens de chute de tension étant prévus pour adoucir les sauts de courant (fig. 6).

23. Circuit selon l'une des revendications 1, 8, 9, 10, 11, 14, 15, 17, 19, caractérisé en ce que les dits moyens de délivrance de décharges érosives (1) comprennent des moyens électroniques de commutation qui délivrent, avec la réserve d'énergie nécessaire à fournir les décharges érosives, une forme d'onde de potentiel à créneaux rectangulaires, les parties à niveau haut de la dite forme d'onde fournissant un potentiel d'une valeur propre à entretenir les décharges érosives préallumées, tandis que les parties à niveau bas de cette forme d'onde fournissent un potentiel substantiellement nul propre à interrompre toute décharge érosive (fig. 7).

**Patentansprüche**

1. Elektrische Schaltung für eine Funkenerosionsbearbeitungsvorrichtung, die ein Stück (Pi) durch Elektro-Erosionsentladungen in einer dielektrischen Umgebung mit einem Bearbeitungsabstand (GAP, d) zwischen einer Werkzeugelektrode (EI) und dem gleichzeitig als Elektrode ausgebildeten Stück (Pi), bearbeitet, die Mittel zur Abgabe von Erosions-Entladungen (1) enthält, mit Ausgangsklemmen, die bezüglich der genannten Elektroden (El, Pi) funkenerodierende Energieimpulse liefern und die Mittel zur Vorzündung (6, 3, 9 ...; 6', 3', ...) enthält, die jedesmal vor dem Erosionsimpuls einen Vorzündimpuls liefern, der eine höhere Spannung, aber eine kleinere Energie als der genannte Erosionsimpuls hat und der jedesmal einen Kanal im Bearbeitungsabstand (GAP, d) inmitten der dielektrischen Flüssigkeit zum anschliessenden Durchlaufen durch die Erosions-Entladung zündet bzw. ionisiert, dadurch gekennzeichnet, dass Impulsbegrenzungsmittel (11, 12) vorhanden sind, um die Spannung der genannten Vorzündimpulse auf den Elektroden (El, Pi) zu verringern, sobald sie einen vorgeschriebenen Wert übersteigt.

2. Schaltung nach Anspruch 1 für eine mit Steuermitteln ausgerüstete Funkenerosionsbearbeitungsvorrichtung, welche die Position der Werkzeugelektrode (El) steuern, um eine geeignete Bearbeitungsdistanz (d) bzw. eine geeignete Abmessung (d) des genannten Bearbeitungsabstandes (GAP) zwischen den beiden Elektroden (El, Pi) zu erhalten, dadurch gekennzeichnet, dass die Impulsbegrenzungsmittel (11, 12) mindestens ein Element (11) mit einer Spannungsbegrenzungscharakteristik enthalten, dessen Grenzspannungswert im wesentlichen dem vorgeschriebenen Wert entspricht, dass das oder die Elemente mit den Elektroden (El, Pi) und/oder mit dem Ausgang der Mittel zur Vorzündung (6, 3, 9, ...) mit Stromleitern verbunden sind, die im wesentlichen keine Spannungsabfälle verursachen, d.h., dass sie Elemente (12, ...) aufweisen, die keine nennenswerten Spannungsabfälle bezüglich dem genannten Grenzspannungswert erzeugen.

3. Schaltung nach Anspruch 1, dadurch gekennzeichnet, dass die Mittel zur Vorzündung (6, 3, 9) weiter mit einem Begrenzungsmittel (14) verbunden sind, das die Reduzierung der verfügbaren Energie für jeden Vorzündimpuls erlaubt.

4. Schaltung nach einem der Ansprüche 1 oder 2, in welcher die Mittel zur Vorzündung eine Vorrichtung (3-6) enthalten, die Vorzündimpulse mit einer bestimmten Energie erzeugt und an ihrem Ausgang zur Verfügung stellt, dadurch gekennzeichnet, dass die Mittel zur Vorzündung Begrenzungsmittel für die Vorzündenergie aufweisen, welche in Serie zur genannten Vorrichtung ein Steuerelement (14) enthalten, das die im Vorzündimpuls verfügbare Energie, welche von den Parametern, Zeit- und Zündspannung abhängt, reduziert, und dass die Spannung im übrigen der Wirkung der Impulsbegrenzungsmittel (11, 12) unterworfen ist.

5. Schaltung nach Anspruch 4, dadurch gekennzeichnet, dass sie einen an die Impulsbegrenzungsmittel (11, 12) angeschlossenen Signalerzeugungsstromkreis (17) enthält, der eine wahrnehmbare Anzeige bezüglich des Stromes, der durch die Impulsbegrenzungsmittel fliesst, liefert, dass ein Einstellelement (16) vorhanden ist, welches das Steuerelement (14) beeinflusst und erlaubt, dessen Grenzleitfähigkeit in Abhängigkeit der genannten wahrnehmbaren Anzeige vom Signalerzeugungsstromkreis (17) einzustellen.

6. Schaltung nach Anspruch 4, dadurch gekennzeichnet, dass sie automatische Begrenzungsmittel (12, 15, 22, 23, 24) für die Vorzündenergie zum automatischen Steuern des Steuerelementes (14) enthält, und dass sich die Leitfähigkeit im letzteren verringert, sobald der Strom in den Impulsbegrenzungsmitteln (11, 12) einen gewissen Wert übersteigt.

7. Schaltung nach Anspruch 6, dadurch gekennzeichnet, dass die automatischen Begrenzungsmittel (12, 15, 22, 23, 24) für die Vorzündenergie ein manuell einstellbares Element (24) aufweisen, das erlaubt, den Wert des Stromes in den Impulsbegrenzungsmitteln nach Belieben einzustellen, dass ein Widerstand (12), der mit einer Zenerdiode (11) in Serie geschaltet ist, einen Istwert liefert, und dass der Widerstand (12) und die Zenerdiode (11) die genannten Impulsbegrenzungsmittel bilden.

8. Schaltung nach Anspruch 1, dadurch gekennzeichnet, dass die Mittel zur Vorzündung (6, 3, 9; 6', 3', ...) an die Mittel zur Abgabe von Erosionsentladungen (1) angeschlossen sind und dass eine mit einer Spannungsschwelle versehene Komponente (3; 3') der Mittel zur Vorzündung den Augenblick zum Auslösen des Vorzündimpulses erkennt, in dem Spannung an den Ausgangsklemmen der Mittel zur Abgabe von Erosionsentladungen (1) einen gewissen Wert aufweist.

9. Schaltung nach Anspruch 8, dadurch gekennzeichnet, dass die Mittel zur Vorzündung durch die Ausgangsklemmen der Mittel zur Abgabe von Erosionsentladungen (1) nicht nur gesteuert sondern auch gespeist sind, dass die Mittel zur Vorzündung einen Spannungserhöhungstransformator (6) aufweisen, dass in Serie zur Primärwicklung dieses Transformators (6) ein Teil des Stromkreises zur Vorzündsteuerung (3, 4, 5; 3', 4', 26, 27, 25, 5') geschaltet und an die Ausgangsklemmen der Mittel zur Abgabe von Erosionsentladungen (1) angeschlossen ist, dass der Teil des Stromkreises zur Vorzündsteuerung die Komponente mit der Spannungsschwelle (3; 3') und einen Kondensator (4; 4') umfasst und dass der Kondensator zur Verhinderung des Fliessens eines Fremdstromes bei der Erzeugung des Vorzündimpulses in der Primärwicklung des Transformators (6) angeordnet ist.

10. Schaltung nach Anspruch 9, dadurch gekennzeichnet, dass der Teil des Stromkreises zur Vorzündsteuerung in Serie zur Primärwicklung des Transformators (6) einen Pfad aufweist, welcher in Serieschaltung mindestens den Kondensator (4) und die Komponente mit der Spannungsschwelle (3) enthält und dass letztere mindestens eine Zenerdiode umfasst.

11. Schaltung nach Anspruch 9, dadurch gekennzeichnet, dass der Teil des Stromkreises zur Vorzündsteuerung einen Steuertransistor (25) umfasst, dessen Basis zur Steuerung der Leitfähigkeit der Kollektoremitterstrecke an einen Pfad angeschlossen ist, der in Serie den Kondensator (4') und die Komponente mit der Spannungsschwelle (3') aufweist, dass die Primärwicklung des Transformators (6') in Serie zur Kollektoremitterstrecke des Transistors (25), zum Empfang der Stromimpulse durch diese Steuerung, angeschlossen ist.

12. Schaltung nach Anspruch 11, dadurch gekennzeichnet, dass der Teil des Stromkreises zur Vorzündsteuerung einen aktiven Impulsrückkopplungsstromkreis (27 - 31) aufweist, mit einem Transistor (29) als Rückkopplungsverstärker zum Zurückführen eines Rückkopplungsimpulses über einen Kondensator (31) auf die Basis des Steuertransistors (25) um dem genannten Teil des Stromkreises zur Vorzündsteuerung die Charakteristik einer monostabilen Schaltstufe zu verleihen.

13. Schaltung nach Anspruch 12, dadurch gekennzeichnet, dass am Transistor (29) des Teiles des Stromkreises zur Vorzündsteuerung ein Eingang (32) vorhanden ist, mit welchem mittels einem Signal beim Feststellen vom unerwünschten Ausbleiben der Vorzündung, unabhängig vom Zustand der Spannung an den Ausgangsklemmen der Mittel zur Abgabe von Erosionsentladungen (1), ein zusätzliches Schalten der Transistoren der monostabilen Schaltstufe, zum Auslösen eines zusätzlichen Vorzündimpulses, erzwingbar ist.

14. Elektrische Schaltung für eine Funkenerosionsbearbeitungsvorrichtung, die ein Stück (Pi) durch Elektro-Erosionsentladungen in einer dielektrischen Umgebung mit einem Bearbeitungsabstand (GAP, d) zwischen einer Werkzeugelektrode (El) und dem gleichzeitig als Elektrode ausgebildeten Stück (Pi), bearbeitet, die Mittel zur Abgabe von Erosions-Entladungen (1) enthält, mit Ausgangsklemmen, die bezüglich der genannten Elektroden (El, Pi) funkenerodierende Energieimpulse liefern und die Mittel zur Vorzündung (6, 3, 9 ...; 6', 3', ...) enthält, die jedesmal vor dem Erosionsimpuls liefern, der eine höhere Spannung, aber eine kleinere Energie als der genannte Erosionsimpuls hat und der jedesmal einen Kanal im Bearbeitungsabstand (GAP, d) inmitten der dielektrischen Flüssigkeit zum anschliessenden Durchlaufen durch die Erosions-Entladung zündet bzw. ionisiert, dadurch gekennzeichnet, dass die Mittel zur Vorzündung (6, 3, 9; 6', 3', ...) an die Mittel zur Abgabe von Erosionsentladungen (1) angeschlossen sind, und dass eine mit einer Spannungsschwelle versehene Komponente (3; 3') der Mittel zur Vorzündung den Augenblick zum Auslösen des Vorzündimpulses erkennt, in dem Spannung an den Ausgangsklemmen der Mittel zur Abgabe von Erosionsentladungen (1) einen gewissen Wert aufweist.

15. Schaltung nach Anspruch 14, dadurch gekennzeichnet, dass die Mittel zur Vorzündung durch die Ausgangsklemmen der Mittel zur Abgabe von Erosionsentladungen (1) nicht nur gesteuert sondern auch gespeist sind, dass die Mittel zur Vorzündung einen Spannungserhöhungstransformator (6) aufweisen, dass in Serie zur Primärwicklung dieses Transformators (6) ein Teil des Stromkreises zur Vorzündsteuerung (3, 4, 5; 3', 4', 26, 27, 25, 5') geschaltet und an die Ausgangsklemmen der Mittel zur Abgabe von Erosionsentladungen (1) angeschlossen ist und dass der Teil des Stromkreises zur Vorzündsteuerung die Komponente mit der Spannungsschwelle (3; 3') und ein Übertragungsorgan (4, 4') ohne direkten Kontakt zum Verhindern des Fliessens eines Fremdstromes bei der Erzeugung des Vorzündimpulses in der Primärwicklung des Transformators (6) umfasst.

16. Schaltung nach Anspruch 15, dadurch gekennzeichnet, dass das Übertragungsorgan ohne direkten Kontakt ein Kondensator (4, 4') ist.

17. Schaltung nach Anspruch 16, dadurch gekennzeichnet, dass der Teil des Stromkreises zur Vorzündsteuerung in Serie zur Primärwicklung des Transformators (6) einen Pfad aufweist, welcher in Serieschaltung mindestens den Kondensator (4) und die Komponente mit der Spannungsschwelle (3) enthält und dass letztere mindestens eine Zenerdiode umfasst.

18. Schaltung nach Anspruch 17, dadurch gekennzeichnet, dass der serielle Pfad einen einstellbaren Widerstand (5) aufweist, zum Ändern des Stromanstieges in der Primärwicklung während des Vorzündimpulses.

19. Schaltung nach Anspruch 16, dadurch gekennzeichnet, dass der Teil des Stromkreises zur Vorzündsteuerung einen Steuertransistor (25) umfasst, dessen Basis zur Steuerung der Leitfähigkeit der Kollektoremitterstrecke an einen Pfad angeschlossen ist, der in Serie den Kondensator (4') und die Komponente mit der Spannungsschwelle (3') aufweist, dass die Primärwicklung des Transformators (6') in Serie zur Kollektoremitterstrecke des Transistors (25), zum Empfang der Stromimpulse durch diese Steuerung, angeschlossen ist.

20. Schaltung nach Anspruch 19, dadurch gekennzeichnet, dass der Teil des Stromkreises zur Vorzündsteuerung einen aktiven Impulsrückkopplungsstromkreis (27 - 31) aufweist, mit einem Transistor (29) als Rückkopplungsverstärker zum Zurückführen eines Rückkopplungsimpulses über einen Kondensator (31) auf die Basis des Steuertransistors (25) um dem genannten Teil des Stromkreises zur Vorzündsteuerung die Charakteristik einer monostabilen Schaltstufe zu verleihen.

21. Schaltung nach Anspruch 20, dadurch gekennzeichnet, dass am Transistor (29) des Teiles des Stromkreises zur Vorzündsteuerung ein Eingang (32) vorhanden ist, mit welchem mittels einem Signal beim Feststellen vom unerwünschten Ausbleiben der Vorzündung, unabhängig vom Zustand der Spannung an den Ausgangsklemmen der Mittel zur Abgabe von Erosionsentladungen (1), ein zusätzliches Schalten der Transistoren der monostabilen Schaltstufe, zum Auslösen eines zusätzlichen Vorzündimpulses, erzwingbar ist.

22. Schaltung nach einem der Ansprüche 1, 8, 9, 10, 11, 14, 15, 17, 19, dadurch gekennzeichnet, dass die Mittel zur Abgabe von Erosionsentladungen (1) einen Arbeitskondensator aufweisen, der sich periodisch nach einer Schwingungsfunktion lädt und entlädt und dass Spannungsabfallmittel vorgesehen sind zum Dämpfen der Stromsprünge (Fig. 6).

23. Schaltung nach einem der Ansprüche 1, 8, 9, 10, 11, 14, 15, 17, 19, dadurch gekennzeichnet, dass die Mittel zur Abgabe von Erosionsentladungen (1) elektronische Schaltmittel auweisen, die mit dem Bestand der zur Abgabe der Erosionsentladungen notwendigen Energie wellenförmige Rechteckimpulse erzeugen, dass die hohen Pegel der Impulse ein Potential mit einem geeigneten Wert für die erosiven Vorzündentladungen liefern und dass die tiefen Pegel der Impulse im wesentlichen ein Nullpotential zum Unterbrechen aller erosiven Entladungen aufweisen (Fig. 7).


**Claims**

1. Electric circuit for an electro-discharge machine machining a workpiece (Pi) by electroerosive discharges in a dielectric medium, in a machining gap (GAP, d) between a tool electrode (El) and the said workpiece (Pi) which itself also constitutes an electrode, comprising means for delivering erosive discharges (1), having output terminals which respectively supply to the said electrodes (El, Pi) erosive pulses of electrical energy, and preignition means (6, 3, 9, ...; 6', 3', ...) for supplying, each time as a prologue to said erosive pulse, preignition pulses which have a higher voltage and less energy than the said erosive pulses, and which ignite, i.e. ionize, each time, in the machining gap (GAP, d) within the dielectric fluid, a channel through which the erosive discharge then passes, characterized in that it comprises clipping means (11, 12) arranged to reduce the voltage of the said preignition pulses at the said electrodes (El, Pi) when it exceeds a set value.

2. Circuit according to claim 1, for an electro-discharge machine equipped with means which control the positioning of the tool electrode (El) for suitably establishing the machining distance (d), i.e. the dimension (d) of the said machining space (GAP) between the two electrodes (El, Pi), characterized in that the the said clipping means (11, 12) comprise at least one component (11) having a voltage-limiting characteristic, the limiting-voltage value of which corresponds substantially to the said set value, the component or components being connected to the said electrodes (El, Pi) and/or to the output connections of the said preignition means (6, 3, 9,. ..) by conduction paths substantially free of obstacles dropping the voltage, i.e. comprising at most elements (12, ...) not involving any appreciable voltage drop relative to the said limiting-voltage value.

3. Circuit according to claim 1, characterized in that the said preignition means (6, 3, 9) are further provided with limiting means (14) permitting reduction of the energy available for each preignition pulse.

4. Circuit according to claim 1 or claim 2, wherein the said preignition means comprise an arrangement (3-6) which generates, and delivers at its output, each preignition pulse with a finite energy, characterized in that the said preignition means further comprise preignition energy limiting means, which comprise, in series with the ouput of the said arrangement, a transistor-type controlled element (14) which reduces the available energy in the preignition pulse, which energy also depends upon the parameters of time and voltage of the pulse, that of voltage furthermore remaining subject to the action of the said clipping means (11, 12).

5. Circuit according to claim 4, characterized in that it comprises a signalling circuit (17) connected to the said clipping means (11, 12) and supplying a perceptible indication relating to the current passing through the latter, and a manually adjustable component (16) which acts upon the said controlled element (14) and permits the conduction limit of the latter to be established in dependence upon the said perceptible indication supplied by the said signalling circuit (17).

6. Circuit according to claim 4, characterized in that it comprises automatic preignition energy limiting means (12, 15, 22, 23, 24) arranged for controlling the said controlled element (14) automatically so that it decreases its conduction when the current in the said clipping means exceeds a given value.

7. Circuit according to claim 6, characterized in that the said automatic preignition energy limiting means (12, 15, 22, 23, 24) comprise a manually adjustable component (24) which permits regulating at will the said given value of the current in the clipping means, this value being supplied by a resistor (12) connected in series with a Zener diode (11) to constitute the said clipping means.

8. Circuit according to claim 1, characterized in that the said preignition means (6, 3, 9; 6', 3', ...) are connected to the said means for delivering erosive discharges (1), so that a voltage threshold component (3; 3') of the preignition means recognizes the moment when a certain voltage value is present at the output terminals of the said erosive discharge means (1), and that the preignition pulse occurs at that moment.

9. Circuit according to claim 8, characterized in that the said preignition means are not only controlled but also fed by the output terminals of the said means for delivering erosive discharges (1), these preignition means comprising a step-up transformer (6) and, in series with the primary of this transformer (6), the whole connected to the said output terminals of the said means for delivering erosive discharges (1), a preignition control circuit part (3, 4, 5; 3', 4', 26, 25, 27, 5') comprising the said voltage threshold component (3; 3') and a capacitor (4; 4'), this capacitor having the effect of preventing the passage in the said primary of a current extraneous to the generating of preignition pulses.

10. Circuit according to claim 9, characterized in that the said preignition control circuit part consists of a circuit branch which is in series with the said primary of the said transformer (6), and which comprises in series at least the said capacitor (4) and the said voltage threshold component (3), the latter being formed of at least one Zener diode.

11. Circuit according to claim 9, characterized in that the said preignition control circuit part comprises a preignition control transistor (25), the base of which is connected, for control of the conduction of its emitter-collector section, to a circuit branch comprising in series the said capacitor (4') and the said voltage threshold element (3'), the said primary of the transformer (6') being connected in series with the emitter-collector section of the said transistor (25) for receiving from it current pulses under the said control.

12. Circuit according to claim 11, characterized in that the said preignition control circuit part further comprises an active pulse-feedback loop (27-31) comprising a feedback-amplifying transistor (29) capable of applying via a reaction capacitor (31), a feedback loop pulse to the base connection of the preignition control transistor (25) for giving the said preignition control circuit part the operating characteristic of a monostable flip-flop.

13. Circuit according to claim 12, characterized in that it comprises, connected to one of the transistors of the said preignition control circuit part, an input (32) to which there can be applied a signal which, independently of the evolution of the voltage at the said output terminals of the said means for delivering erosive discharges, tends to cause an additional double flipping of these transistors, operating as a monostable flip-flop, for generating an additional preignition pulse, the said signal being applied upon detection of an undesired absence of preignition.

14. Electric circuit for an electro-discharge machine machining a workpiece (Pi) by electroerosive discharges in a dielectric medium, in a machining gap (GAP, d) between a tool electrode (El) and the said workpiece (Pi) which itself also constitutes an electrode, comprising means for delivering erosive discharges (1), having output terminals which respectively supply to the said electrodes (El, Pi) erosive pulses of electrical energy, and preignition means (6, 3, 9, ...; 6', 3', ...) for supplying, each time as a prologue to said erosive pulse, preignition pulses which have a higher voltage and less energy than the said erosive pulses, and which ignite, i.e. ionize, each time, in the machining gap (GAP, d) within the dielectric fluid, a channel through which the erosive discharge then passes, characterized in that the said preignition means (6, 3, 9; 6', 3', ...) are connected to the said means for delivering erosive discharges (1) in such a way that a voltage threshold component (3; 3') of the preignition means recognizes the moment when a certain voltage value is present at the output terminals of the said erosive discharge means (1), and that the preignition pulse occurs at that moment.

15. Circuit according to claim 14, characterized in that the said preignition means are not only controlled but also fed by the output terminals of the said means for delivering erosive discharges (1), these preignition means comprising a step-up transformer (6) and, in series with the primary of this transformer (6), the whole connected to the said output terminals of the said means for delivering erosive discharges (1), a preignition control circuit part (3, 4, 5; 3', 4', 26, 25, 27, 5') comprising the said voltage threshold component (3; 3') and a transmission part without direct contact (4, 4') capable of preventing the passage in the said primary of a current extraneous to the generating of the preignition pulses.

16. Circuit according to claim 15, characterized in that the said transmission part without direct contact is a capacitor (4; 4').

17. Circuit according to claim 16, characterized in that the said preignition control circuit part consists of a circuit branch which is in series with the said primary of the said transformer (6), and which comprises in series at least the said capacitor (4) and the said voltage threshold component (3), the latter being formed of at least one Zener diode.

18. Circuit according to claim 17, characterized in that the said series branch comprises in addition an adjustable resistor (5) by which the evolution of the current in the said primary can be modified during the preignition pulse.

19. Circuit according to claim 16, characterized in that the said preignition control circuit part comprises a preignition control transistor (25), the base of which is connected, for control of the conduction of its emitter-collector section, to a circuit branch comprising in series the said capacitor (4') and the said voltage threshold element (3'), the said primary of the transformer (6') being connected in series with the emitter-collector section of the said transistor (25) for receiving from it current pulses under the said control.

20. Circuit according to claim 19, characterized in that the said preignition control circuit part further comprises an active pulse-feedback loop (27-31) comprising a feedback-amplifying transistor (29) capable of applying, via a reaction capacitor (31), a feedback loop pulse to the base connection of the preignition control transistor (25) for giving the said preignition control circuit part the operating characteristic of a monostable flip-flop.

21. Circuit according to claim 20, characterized in that it comprises, connected to one of the transistors of the said preignition control circuit part, an input (32) to which there can be applied a signal which, independently of the evolution of the voltage at the said output terminals of the said means for delivering erosive discharges, tends to cause an additional double flipping of these transistors, operating as a monostable flip-flop, for generating an additional preignition pulse, the said signal being applied upon detection of an undesired absence of preignition.

22. Circuit according to one of the claims 1, 8, 9, 10, 11, 14, 15, 17, 19, characterized in that the said means for delivering erosive discharges (1) comprise a machining capacitor periodically charging and discharging according to a relaxation operating mode, voltage drop means being provided for softening the current jumps (Fig. 6).

23. Circuit according to one of the claims 1, 8, 9, 10, 11, 14, 15, 17, 19, characterized in that the said means for delivering erosive discharges (1) comprise electronic switching means which deliver, with the energy reserve necessary for supplying the erosive discharges, a potential waveshape having rectangular strobe pulses, the high-level portions of the said waveshape supplying a potential of a value suitable for maintaining the preignited erosive discharges, while the low-level portions of this waveshape supply a substantially zero potential suitable for interrupting any erosive discharge (Fig. 7).

**Fig. 1**

Fig. 2

Fig. 5

3

**Fig. 3**

Fig.4

Fig. 6

Fig. 7

**Fig. 8**